# EUROPÄISCHE PATENTSCHRIFT

(11) **EP 0 809 181 B1**
(45) Veröffentlichungstag und Bekanntmachung des Hinweises auf die Patenterteilung: **26.01.2000**
(21) Anmeldenummer: 96108175.9
(22) Anmeldetag: 22.05.1996
(51) Int. Cl.: G06F 9/44, G06F 9/445

(54) **Verfahren zum Austausch von Software in laufenden Steuerungssystemen**
Method for exchanging software in operating control systems
Méthode d'échange de logiciel dans des systèmes de commande en cours de fonctionnement

(43) Veröffentlichungstag der Anmeldung: 26.11.1997
(73) Patentinhaber: SIEMENS AKTIENGESELLSCHAFT, 80333 München (DE)
(72) Erfinder: Herwig, Eltschka, Dipl. Ing., 82319 Starnberg (DE)

(56) Entgegenhaltungen:
- WO-A-94/01819
- US-A- 5 155 837
- ELECTRICAL COMMUNICATION, Bd. 64, Nr. 4, 1990, ROMFORD ESSEX, GB, Seiten 327-333, XP000230842 U. APEL: "On-Line Software Extension and Modification"

## Beschreibung

Ein Steuerungssystem, bestehend aus mehreren programmgesteuerten Einzeleinrichtungen, z.B. ein Vermittlungssystem, kann nichtgedoppelte programmgesteuerte Steuerungseinrichtungen besitzen. Wird eine solche Einrichtung, z.B. im Zuge eines Austausches von Software (im folgenden kurz SW") dieser Einrichtung oder von SW der gesamten Vermittlungsstelle, mit neuer SW geladen, so ist für die Dauer des Ladens dieser nicht gedoppelten Einrichtung über diese kein Betrieb, z.B. Vermittlungsbetrieb, möglich.

Die Betriebsbereitschaft der Einrichtung mit der neuen SW wird i.A. nach Durchführung folgender Schritte erreicht:
1.Laden des ablauffähigen, neuen Programms (neuer Code und neue Datenbasis) von einer Speichereinrichtung (Hintergrundspeicher), gegebenenfalls über eine Ladeeinrichtung, in die nichtgedoppelte Steuerungseinrichtung und Ersatz des aktuellen Programms.
2.Laden der Grunddaten, d.h. der semipermanenten Daten und der Startwerte der transienten Daten, in den Arbeitsspeicher der nichtgedoppelten Einrichtung und Einarbeiten der Grunddaten in die neue Datenbasis (Grunddaten beschreiben die Struktur, gegenseitige Zuordnung und den Featureumfang der einzelnen von der nichtgedoppelten Einrichtung selbst und der von ihr gesteuerten Untereinrichtungen, z.B. administrative Teilnehmer-Beschreibungsdaten, Zuordnung von Teilnehmern zu Steuerkanälen usw.). Dabei ist zu beachten, daß die Struktur der Grunddaten in der neuen Datenbasis i.A. anders aussehen wird.
3.Übernahme der aktuellen, transienten Daten welche die aktuelle Betriebssituation der Einrichtung beschreiben, d.h aktueller Stand im Vermittlungsprozeß (aktueller Stand der transienten Einrichtungszuordnungen, Zustandsbeschreibungen und Wegeeinstellungen).

Das Einbringen einer bestimmten neuen SW muß möglich sein für unterschiedliche Versionsstände der aktuellen SW. (Überspringen von Zwischenversionen).

Vorteilhaft wäre es auch, eine möglichst kurze, oder im Idealfall gar keine Unterbrechung des Betriebs zu erreichen. Das kann prinzipiell durch Verkürzung der Dauer der beschriebenen Aktionen oder durch Ablauf im Hintergrund parallel zum weiterlaufenden aktuellen Betrieb geschehen.

Zu dem obengenannten Schritt 1.) gibt es verschiedene Verfahren, wie z. B. das Laden der neuen SW während des mit der alten SW laufenden Betriebs in einen Hintergrundspeicher und Kopieren der SW in den Arbeitsspeicher bei SW-Tausch. Dies ist auch für das reine Laden der Grunddaten anwendbar, nicht jedoch ohne weiteres für das Einarbeiten der Grunddaten in die neue Datenbasis, denn diese Grunddaten sind in der neuen Datenbasis i.A. anders strukturiert oder neu hinzugefügt. Da die aktuelle SW diese Strukturen nicht kennt, sind Abbildungsfunktionen zu erstellen, welche die alten Datenstrukturen auf die neuen abbilden. Pro möglichem/vorgesehenem Versionssprung müßte ein eigener Satz von Abbildungsfunktionen vorgesehen werden.

In "On-Line Software Extension and Modification", Electrical Communication 64 (1990), Nr. 4, wird ein Verfahren zum Austausch von SW in laufenden Steuerungssystemen beschrieben, das solche Abbildungsfunktionen verwendet. Dort werden sie von einer speziellen SW-Komponente ausgewertet.

Der Erfindung liegt die Aufgabe zugrunde, das genannte Problem zu überwinden.

Diese Aufgabe wird durch die Erfindung gemäß den Merkmalen von Anspruch 1 gelöst.

Augrund der Erfindung sind in der alten SW keine versionsabhängigen Vorleistungen mehr nötig und in der neuen SW keine Abbildungsfunktionen.

Eine Ausführungsform der Erfindung ist durch Anspruch 2 angegeben. Diese Ausführungsform hat den Vorteil, daß die Aktualisierung der transienten Daten sehr schnell erfolgt und damit die neue SW die Kontrolle über den Betrieb bereits nach kurzer Zeit übernehmen kann.

Eine weitere Ausführungsform der Erfindung ist durch Anspruch 3 angegeben. Diese Ausführungsform hat den Vorteil, daß für die Aktualisierung der transienten Daten keine Betriebsunterbrechung erforderlich ist.

Eine weitere Ausführungsform der Erfindung ist durch Anspruch 4 angegeben. Diese Ausführungsform hat den Vorteil, daß für die Aktualisierung der transienten Daten keine Betriebsunterbrechung erforderlich ist und außerdem keine Abbildungsfunktionen erforderlich sind.

Im folgenden wird die Erfindung anhand eines Ausführungsbeispiels mit Zeichnung näher erläutert.

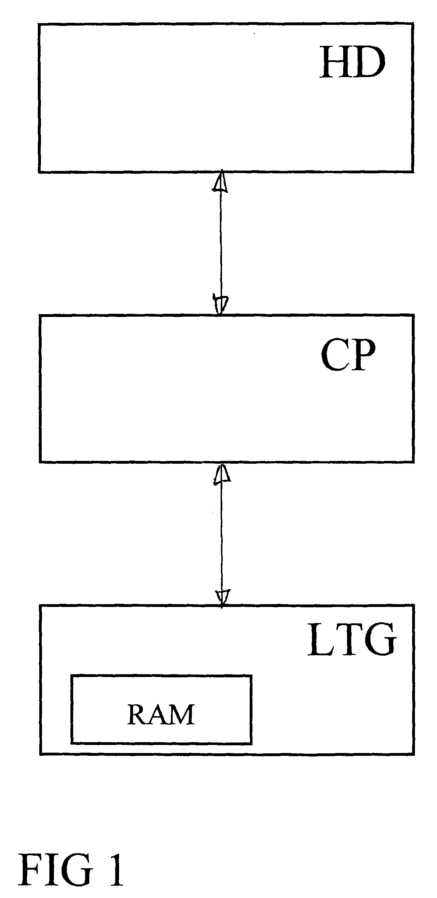

FIG 1 zeigt die am Laden von neuer SW beteiligten Einrichtungen, nämlich einen Hintergrundspeicher HD, eine Ladeeinrichtung CP und eine Steuerungseinrichtung LTG mit einem Arbeitsspeicher RAM, der die neue SW aufnimmt.

Das erfindungsgemäße Verfahren setzt die bekannte Lösung insoweit voraus,
- daß die neue SW (neuer Code und dazugehörige neue Datenbasis) bereits in ablauffähiger Form in dem Hintergrundspeicher HD vorliegt.
- daß die aktuelle SW Zugang zu der Ladeeinrichtung CP besitzt, von der aus die neue SW einschließlich der Daten geladen wird.

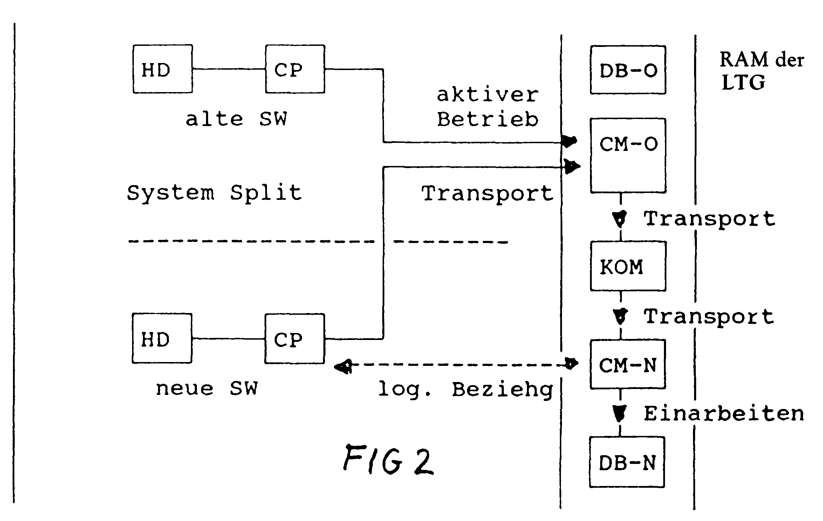

FIG 2 zeigt das erfindungsgemäße Verfahren.

Die Erfindung besteht darin, daß der in das RAM der LTG geladene neue Code (genauer der das Betriebssystem realisierende Teil des neuen Codes, der wiederum den anwendungsbezogenen neuen Code zur Ausführung bringt) parallel zum weiterarbeitenden aktuellen Code (alter Code CM-O) gestartet wird und alternierend mit diesem abläuft, verbunden mit folgenden Einschränkungen:
- Der neue Code CM-N läuft unter der Kontrolle des aktuellen Codes ab, d.h. allein der aktuelle Code hat den Zugriff auf die HW-Schnittstellen zu externen Einrichtungen (z.B. Kommunikationssystem) und Zugriff auf die HW selbst.
- Der neue Code wird nur für derart kurze Zeitabschnitte aktiviert, daß der aktuelle Code seine Arbeit ungehindert weiter verrichten kann.
- der neue Code hat nur Zugriff auf seine eigene Datenbasis (neue Datenbasis DB-N) und einen speziellen Speicherbereich des Arbeitsspeichers, einen sogenannten Kommunikationsbereich KOM.
- Der aktuelle Code wickelt die Kommunikationsbeziehung mit der Ladeeinrichtung CP zum Laden der neuen SW über ein Protokoll ab, das bei SW-Austausch nicht geändert werden darf.

Der aktuelle Code kommuniziert mit dem abschnittsweise laufenden neuen Code über den Kommunikationsbereich KOM. Über diesen Kommunikationsbereich werden über eine versionsneutrale Schnittstelle Nachrichten zwischen neuer und aktueller SW ausgetauscht.

Das Laden der Grunddaten wird bereits von der neuen SW unter Zuhilfenahme der alten SW durchgeführt. Die alte SW bewerkstelligt den Transport der neuen Daten von der Ladeeinrichtung CP in den Kommunikationsbereich, und die neue SW holt die Daten aus dem Kommunikationsbereich und arbeitet sie in die neue Datenbasis ein. Da der neue Code selbst die Einarbeitung der Daten in die Datenbasis durchführt, sind in dem aktuellen Code keine versionsabhängigen Vorleistungen erforderlich und in dem neuen Code keine Abbildungsfunktionen.

Am Ende des Ladens und Einarbeitens der Grunddaten sowie des Setzens/Ladens der transienten Initialdaten ist die neue SW in einem betriebsbereiten Zustand. Mit der Übergabe der Kontrolle von der aktuellen SW an die neue SW (im Falle des Setzens der transienten Daten auf Initialwerte verbunden mit dem Verlust aller laufenden Aktionen, z.B. aller stabilen Verbindungen) steuert die neue, jetzt aktuelle SW ohne nennenswerte Betriebsunterbrechung den Nutzbetrieb der Einrichtung.

Das beschriebene Verfahren ermöglicht es, auch bestehende Abläufe weiterzuführen, z.B. bestehende Verbindungen zu erhalten.

Da der SW-Tausch i.A. nur bei intakter HW durchgeführt wird, kann auf Neuinitialisierung der HW und der transienten SW-Daten verzichtet werden, wenn vor dem Umschalten, d.h vor der Übergabe der Steuerung an die neue SW, die notwendige Information über alle laufenden HW-und SW Einstellungen vollständig von der aktuellen SW an die neue SW weitergegeben wird. Dazu dient ebenfalls der Kommunikationsbereich und eine versionsneutrale Nachrichtenschnittstelle. Es sind zwei Verfahren möglich:
- erstes Verfahren: Übergabe der notwendigen (d.h. vom Initialstand der neuen SW abweichenden) transienten Betriebsdaten in einem Zuge. Nach Abschluß des Ladens und Einarbeitens der Grunddaten sowie der (Standard-)Initialisierung der transienten Daten in der neuen SW trägt die noch aktuelle, alte SW alle vom (Standard-)Initialwert abweichenden Daten (alte Datenstruktur!) in den Kommunikationsbereich ein, dann sofortige Übergabe der Steuerung an die neue SW (Umschaltung), dann Übernahme und Einarbeitung der Daten durch die neue SW (zur Einarbeitung müssen Abbildungsfunktionen in der neuen SW überall dort vorgeleistet werden, wo sich die neuen Datenstrukturen von den alten Datenstrukturen unterscheiden) und schließlich Fortsetzung des Betriebs durch die neue SW an derjenigen Stelle, an der die Umschaltung stattgefunden hat.
- zweites Verfahren: Die Übergabe der transienten Daten durch die aktuelle SW geschieht nicht in einem Zuge mit der Übergabe der Steuerung, sondern die neue SW wird langsam im Hintergrund aktualisiert und mitlaufend aktuell gehalten. Die neue SW erhält damit ein genaues Abbild und hat zum Zeitpunkt der Übernahme der Steuerung bereits alle notwendigen Daten. Die Übernahme ist damit praktisch ohne Unterbrechung möglich. Eine solche Übergabe kann auch durch Erzeugung eines Schattenbetriebs (Betrieb, der zwar von der neuen SW durchgeführt wird, der jedoch unter der Kontrolle der alten SW steht) erfolgen. In diesem Fall kann eine Abbildungsfunktion entfallen. Einschränkungen der letztgenannten Variante: während des Schattenbetriebs ist kein direkter Zugriff der neuen SW auf die HW erlaubt; wo eine Zuordnung (z.B. von Betriebsmitteln) nicht eindeutig vorherbestimmbar ist, muß der von der aktuellen SW bestimmte Wert über den Kommunikationsbereich an die neue SW ("Schattenseite") übertragen werden (Erläuterung: Wenn die SW aus mehreren möglichen Betriebsmitteln nicht exakt vorhersagbar eine auswählt, (z. B. Zuordnung eines freien Zeitschlitzes zu einer aktuellen Tln.-Verbindung u.ä.), kann von der "Schatten-SW" nicht angenommen werden, daß sie die gleiche Wahl trifft. Wenn diese Zuordnung aber wichtig ist, muß sie übergeben werden).

## Patentansprüche

1. Verfahren zum Austausch von SW in laufenden Steuerungsystemen, demgemäß
a) das Laden des neuen Codes von einer Speichereinrichtung (HD, CP) des Steuerungssystems in den Arbeitsspeicher (RAM) einer Steuerungseinrichtung (LTG) des Steuerungssystems von dem aktuellen Code der Steuerungseinrichtung (LTG) gesteuert wird,
b) der neue Code vom alten Code jeweils für kurze ZeitabSchnitte aktiviert wird, wobei der neue Code während seiner Aktivierungszeiten ausschließlich auf seine Datenbasis, die sogenannte neue Datenbasis (DB-N), und einen speziellen Speicherbereich des Arbeitsspeichers (RAM), den sogenannten Kommunikationsbereich (KOM), Zugriff besitzt,
c) wobei alter und neuer Code auf den genannten Kommunikationsbereich über eine versionsneutrale Schnittstelle zugreifen,
d) die in die neue Datenbasis einzuarbeitenden neuen Daten vom alten Code in den genannten Kommunikationsbereich geladen werden,
e) die Einarbeitung der neuen Daten in die neue Datenbasis (DB-N) von dem neuen Code durchgeführt wird, der die Daten hierzu dem genannten Kommunikationsbereich entnimmt,
f) die Kontrolle über den Betrieb der Steuerungseinrichtung (LTG), insbesondere den Zugriff auf sämtliche Speicherbereiche des Arbeitsspeichers (RAM), an den neuen Code übergeben wird, sobald die Einarbeitung der neuen Daten in die neue Datenbasis (DB-N) abgeschlossen ist.

2. Verfahren nach Anspruch 1,
**dadurch gekennzeichnet**,
die neue Datenbasis (DB-N) bezüglich der vom Initialwert abweichenden transienten Daten in einem Zuge über den genannten Kommunikationsbereich (KOM) aktualisiert wird, bevor die genannten Übergabe der Betriebs-Kontrolle an den neuen Code erfolgt.

3. Verfahren nach Anspruch 1,
**dadurch gekennzeichnet**,
die neue Datenbasis (DB-N) bezüglich der vom Initialwert abweichenden transienten Daten im Hintergrund über den genannten Kommunikationsbereich (KOM) aktualisiert wird, bevor die genannten Übergabe der Betriebs-Kontrolle an den neuen Code erfolgt.

4. Verfahren nach Anspruch 1,
**dadurch gekennzeichnet**,
die neue Datenbasis (DB-N) bezüglich der vom Initialwert abweichenden transienten Daten im Hintergrund über einen Schattenbetrieb des neuen Codes aktualisiert wird, bevor die genannten Übergabe der Betriebs-Kontrolle an den neuen Code erfolgt.

## Claims

1. Method for exchanging SW in operating control systems, according to which
a) the loading of the new code from a storage device (HD, CP) of the control system into the main memory (RAM) of a control device (LTG) of the control system is controlled by the current code of the control device (LTG),
b) the new code is activated by the old code in each case for short time periods, in which case, during its activation times, the new code has access exclusively to its database, the so-called new database (DB-N), and a special memory area of the main memory (RAM), the so-called communication area (KOM),
c) in which case the old and new codes access the said communication area via a version-neutral interface,
d) the new data to be incorporated into the new database are loaded into the said communication area by the old code,
e) the incorporation of the new data into the new database (DB-N) is carried out by the new code, which takes the data from the said communication area for this purpose,
f) the control of the operation of the control device (LTG), in particular the access to all the memory areas of the main memory (RAM), is transferred to the new code as soon as the incorporation of the new data into the new database (DB-N) is concluded.

2. Method according to Claim 1,
characterized in that
the new database (DB-N) is updated with regard to the transient data, deviating from the initial value, all at once by means of the said communication area (KOM) before the operational control is transferred to the new code in the aforementioned manner.

3. Method according to Claim 1,
characterized in that
the new database (DB-N) is updated with regard to the transient data, deviating from the initial value, in the background by means of the said communication area (KOM) before the operational control is transferred to the new code in the aforementioned manner.

4. Method according to Claim 1,
characterized in that
the new database (DB-N) is updated with regard to the transient data, deviating from the initial value, in the background by means of a shadow mode of the new code before the operational control is transferred to the new code in the aforementioned manner.

## Revendications

1. Méthode d'échange de logiciel dans des systèmes de commande en cours de fonctionnement, selon laquelle
a) le chargement d'un nouveau code d'un dispositif de mémoire (HD, CP) du système de commande dans la mémoire de travail (RAM) d'un dispositif de commande (LTG) du système de commande est commandé par le code actuel du dispositif de commande (LTG),
b) le nouveau code est activé par l'ancien code à chaque fois pour de courtes périodes, le nouveau code, pendant ses périodes d'activation, ayant exclusivement accès à sa base de données, dite nouvelle base de données (DB-N), et à une zone de mémoire spéciale de la mémoire de travail (RAM), dite zone de communication (KOM),
c) l'ancien et le nouveau code ayant accès à ladite zone de communication via une interface indépendante de la version,
d) les nouvelles données à introduire dans la nouvelle base de données sont chargées dans ladite zone de communication par l'ancien code,
e) l'introduction des nouvelles données dans la nouvelle base de données (DB-N) est effectuée par le nouveau code qui à cet effet extrait les données de ladite zone de communication,
f) le contrôle du fonctionnement du dispositif de commande (LTG), en particulier de l'accès à l'ensemble des zones de mémoire de la mémoire de travail (RAM), est transféré au nouveau code dès que l'introduction des nouvelles données dans la nouvelle base de données (DB-N) est terminée.

2. Méthode selon la revendication 1, caractérisée en ce que la nouvelle base de données (DB-N), pour ce qui est les données transitoires s'écartant de la valeur initiale, est actualisée d'un seul trait sur ladite zone de communication (KOM), avant que n'ait lieu ledit transfert du contrôle de fonctionnement au nouveau code.

3. Méthode selon la revendication 1, caractérisée en ce que la nouvelle base de données (DB-N), pour ce qui est les données transitoires s'écartant de la valeur initiale, est actualisée à l'arrière-plan sur ladite zone de communication (KOM), avant que n'ait lieu ledit transfert du contrôle de fonctionnement au nouveau code.

4. Méthode selon la revendication 1, caractérisée en ce que la nouvelle base de données (DB-N), pour ce qui est les données transitoires s'écartant de la valeur initiale, est actualisée à l'arrière-plan par un fonctionnement à ombre du nouveau code, avant que n'ait lieu ledit transfert du contrôle de fonctionnement au nouveau code.
